# EUROPÄISCHE PATENTANMELDUNG

(11) **EP 0 801 094 A2**
(43) Veröffentlichungstag der Anmeldung: **15.10.1997**
(21) Anmeldenummer: 97104684.2
(22) Anmeldetag: 19.03.1997
(51) Int. Cl.: C08J 3/20, C08J 9/32

(54) **Verfahren zur Herstellung eines Formteiles aus einem thermoplastisch verarbeitbaren Polymer-Compound**

(30) Priorität: 09.04.1996 DE 19614022
(71) Anmelder: YMOS AKTIENGESELLSCHAFT Industrieprodukte, 63179 Obertshausen (DE); Rottolin-Werk Julius Rotter & Co., 95448 Bayreuth (DE)
(72) Erfinder: Petrakis, Jordanis, 51399 Burscheid (DE); Leenaertz, Torsten, 42285 Wuppertal (DE); Göpper, Uwe, 42283 Wuppertal (DE); Vollmer, Heinz, 42285 Wuppertal (DE); Kleinsimlinghaus, Heinz-Werner, 45239 Essen (DE); Erk, Robert, 95445 Bayreuth (DE); Ramisch, Hartmut, 95469 Speichersdorf (DE)
(74) Vertreter: Podszus, Burghart, Dipl.-Phys., Dipl.-Wirtsch.-Ing.

(57) **Zusammenfassung**

Die Erfindung betrifft ein Verfahren zur Herstellung eines Formteiles (15) aus einem thermoplastisch verarbeitbaren Polymer-Compound (8).

Um zu erreichen, daß das jeweilige Formteil (15) einen in weiten Grenzen variierbaren Anteil unzerstörter aluminiumsilicatischer Mikrohohlkugeln als Füllstoff enthält, schlägt die Erfindung vor, in einem ersten Verfahrensabschnitt ein aus mindestens einem thermoplastisch verarbeitbaren Basispolymer (3) und einem Füllstoff (4) mit 5-80 Gew% aluminiumsilicatischer Mikrohohlkugeln (Mikro-ASHK) bestehendes Polymer-Compound (8) herzustellen, und in einem zweiten Verfahrensabschnitt dieses Polymer-Compound (8) dann zur Herstellung des Formteiles (15) zu verwenden.

Die Erfindung bezieht sich ferner auf das Polymer-Compound (8) und auf ein Verfahren zu seiner Herstellung.

## Beschreibung

Die Erfindung betrifft ein Verfahren zur Herstellung eines Formteiles aus einem thermoplastisch verarbeitbaren Polymer-Compound. Die Erfindung bezieht sich ferner auf ein Polymer-Compound für ein derartiges Verfahren sowie auf ein Verfahren zur Herstellung des Polymer-Compounds.

Zur Herstellung von Formteilen, insbesondere von Automobilteilen, ist die Verwendung thermoplastisch verarbeitbarer Polymere und Polymer-Compounds bekannt. Diese Materialien werden dabei beispielsweise in einer Spritzgießmaschine plastifiziert und die erhitzte Formmasse, z.B. beim Spritzgießverfahren, in ein entsprechendes Formwerkzeug gespritzt. Nach Abkühlung und Erstarren des Formteiles wird dieses dann aus dem Formwerkzeug ausgestoßen.

Es ist ferner möglich, zusammen mit dem jeweiligen Basispolymer in die Spritzgießmaschine einen Füllstoff, wie Talkum, Kreide, Schwerspat, Glimmer etc., einzugeben. Die Verwendung des Füllstoffes dient dabei nicht nur zur Streckung des Basispolymers und/oder zur Kostenreduzierung des Verfahrens, sondern dient häufig auch zur Verbesserung der Verarbeitbarkeit der Spritzgießmasse sowie zu einer gewünschten Beeinflussung der Eigenschaften des Endproduktes.

Aus dem Buch von Saechtling "Kunststoff Taschenbuch" 26. Auflage (1995), Carl Hanser Verlag München Wien, Seite 581, ist die Verwendung kugelförmiger Füllstoffe bekannt. Diese verbessern u.a. den Fluß der Formmassen bei deren Verarbeitung und in hoch gefüllten Produkten das Schrumpfverhalten und die Formbeständigkeit der Formteile. Außerdem werden richtungsabhängige Eigenschaften, wie sie etwa bei Glasfasern auftreten, weitgehend vermieden. Silikatische Hohlkugeln führen überdies zu einer teilweise beträchtlichen Gewichtseinsparung sowie zu einer Verbesserung der Schlagzähigkeit des Formteiles.

Versuche der Anmelderin haben allerdings gezeigt, daß beispielsweise bei Verwendung von Schnecken-Spritzgießmaschinen und Extrudern zur Herstellung entsprechender Formteile bei direkter Zugabe von einem aluminiumsilikatische Mikrohohlkugeln enthaltenden Füllstoff die Formteile häufig nicht die vorausgesagten Eigenschaften aufwiesen. Untersuchungen der entsprechenden Formteile ergaben, daß es aufgrund der hohen Scherbelastung zur Herstellung der Spritzgießmasse in der Spritzgießmaschine zur weitgehenden Zerstörung der relativ dünnwandigen Hohlkugeln kommt. Dieses hat zur Folge, daß die entsprechenden Formteile die mit Verwendung der Hohlkugeln an sich verbundenen Vorteile (geringes Gewicht, hohe Formbeständigkeit, richtungsunabhängige Eigenschaften etc.) nicht besitzen. Die Untersuchungen haben ferner ergeben, daß eine weitgehende Zerstörung der Hohlkugeln bei der Bearbeitung in der Spritzgießmaschine nicht nur bei den relativ empfindlichen, aus Glas bestehenden Mikrohohlkugeln, sondern auch bei den stabileren Aluminiumsilicat Mikrohohlkugeln (keramischen Hohlkugeln; im folgenden auch als Mikro-ASHK bezeichnet) eintritt.

Ferner hat sich gezeigt, daß sich bei der direkten Zugabe von Mikro-ASHK als Füllmittel bei der Herstellung von Formteilen eine sehr inhomogene Hohlkugelverteilung in dem fertigen Formteil ergibt.

Soweit der Anmelderin bekannt, werden in der Praxis aus aluminiumselicatischen Hohlkugeln bestehende Füllstoffe in der Regel lediglich in Systemen eingesetzt, die eine scherfreie Verarbeitung, etwa durch Mischen unter Rühren, garantieren. Sie werden daher bevorzugt als Füllstoffe in Klebern, Lacken, Pasten (Plastisolen) etc. verwendet.

Der Erfindung liegt die Aufgabe zugrunde, ein Verfahren anzugeben, mit dem Formteile aus thermoplastisch verarbeitbarem Polymermaterial hergestellt werden können, wobei das jeweilige Formteil einen in weiten Grenzen variierbaren Anteil unzerstörter aluminiumsilicatischer Mikrohohlkugeln als Füllstoff enthält, auch wenn Scherbelastungen bei der Herstellung des Formteiles auftreten. Ferner soll ein entsprechendes Material angegeben werden, mit dem dieses Verfahren vorteilhafterweise realisierbar ist, sowie ein Verfahren zur Herstellung dieses Materials.

Diese Aufgabe wird erfindungsgemäß hinsichtlich des Verfahrens zur Herstellung der Formteile durch die Merkmale des kennzeichnenden Teils des Anspruchs 1, hinsichtlich des Materials durch die Merkmale des kennzeichnenden Teils des Anspruchs 3 und hinsichtlich des Verfahrens zur Herstellung des Materials durch die Merkmale des kennzeichenden Teils des Anspruchs 13 gelöst. Weitere besonders vorteilhafte Ausgestaltungen der Erfindung offenbaren die Unteransprüche.

Die Erfindung beruht im wesentlichen auf dem Gedanken, das relativ empfindliche hohlkugelförmige Füllmaterial nicht direkt zur Herstellung des jeweiligen Formteiles einzusetzen, sondern das Füllmaterial mit mindestens einem Basispolymer zunächst in einem separaten Aufbereitungsprozeß zu einem die Hohlkugeln enthaltenden Polymer-Compound zu verarbeiten und erst anschließend dieses die Hohlkugeln enthaltende Polymer-Compound zur Fertigung der Formteile zu verwenden.

Dabei erfolgt die Herstellung des die Hohlkugeln enthaltenden Compounds derart, daß ein möglichst geringer Anteil der Hohlkugeln beim Mischen, Kneten, Extrudieren und Granulieren zerstört wird. Die entsprechende Anlage ist also primär auf die Herstellung des die Hohlkugeln enthaltenden Compounds ausgelegt. Dabei ist insbesondere bei einer Herstellung mittels eines Extruders darauf zu achten, daß das jeweils verwendete Polymer möglichst schnell seinen Schmelzpunkt erreicht, damit die einzelnen Hohlkugeln sich bei Drehung der Extruderschnecke relativ frei bewegen können und nicht zerstört werden. Die Eintragung der Hohlkugeln bzw. einer Vormischung aus der Beschickungsanlage in die Compoundieranlage (Extruder) erfolgt bevorzugt über eine Seitenbeschickung in die Polymerschmelze.

Als vorteilhaft hat es sich erwiesen, wenn zur besseren Anbindung der Mikro-ASHK an das Basispolymer das Mikro-ASHK mit einer Silanschlichte beschichtet wird. Die Beschichtung kann auch mit Haftvermittlern (Compatibilizern), wie maleinsäure- oder acrylsäuremodifizierte Polymeren und Ethylen-Vinylacetat Copolymeren und/oder Produkten mit gleicher oder ähnlicher Wirkung, erfolgen.

Die Weiterverarbeitung des Compoundgranulates erfolgt in an sich bekannter Weise in einer entsprechenden Anlage, die jeweils auf das herzustellende Formteil ausgelegt ist. Im Falle der Herstellung von Formteilen durch Spritzgießen wird also z.B. die Schnecke sowie die Heizung der Spritzgießmaschine speziell auf das herzustellende Formteil abgestimmt.

Überraschenderweise hat sich nun gezeigt, daß bei einem derartigen zweistufigen Verfahrensablauf die Anzahl der zerstörten Hohlkugeln in dem fertigen Formteil wesentlich geringer ist, als wenn die Hohlkugeln der für die Herstellung des Formteiles erforderlichen Anlage direkt hinzugegeben worden wären. Außerdem ist die Verteilung der Hohlkugeln in dem Formteil wesentlich homogener.

Als zweckmäßig hat es sich erwiesen, wenn das mit dem Compound-Extruder hergestellte Material einen Füllstoffanteil von 5-80 Gew%, vorzugsweise einen Anteil von 10-60 Gew%, aluminiumsilicatischer Mikrohohlkugeln (Mikro-ASHK) besitzt.

Als vorteilhaft hat es sich ferner erwiesen, wenn die Mikro-ASHK eine Schale besitzen, die aus 27-33 Gew% Al₂O₃, 55 Gew% SiO₂ und maximal 4 Gew% Fe₂O₃ besteht. Die Kohlkugeln sollten eine Gasfüllung, bestehend aus Kohlendioxid und Stickstoff, aufweisen. Bei dem zur Herstellung des Compounds benötigten Mikro-ASHK-Pulver sollte es sich um ein freifließendes Pulver mit einer Dichte zwischen 0,4 und 1 g/cm³ handeln.

Bei dem Füllstoff kann es sich auch um eine Mischung zwischen den Mikro-ASHK und einem anderen Füllstoff, wie Talkum, Kreide, Schwerspat, Glimmer, Kohlefasern, Glasfasern, Glaskugeln, natürlichen oder mineralischen Fasern, handeln. Dabei sollte allerdings der Füllstoffanteil der Mikro-ASHK mindestens 10 Gew% betragen.

Hinsichtlich der Korngrößenverteilung ist es vorteilhaft, wenn die Korndurchmesser möglichst klein sind. Sie sollten auf jeden Fall ≤ 600 µm sein. Da Materialien mit kleinem Korndurchmesser relativ teuer sind, werden in der Praxis zwischen einer technischen wünschenswerten Korngrößenverteilung von 5-85 µm und einer aus preislicher Sicht günstigsten Verteilung 5-600 µm als Kompromiß häufig Korngrößenverteilung zwischen 5-300 und 5-500 µm verwendet.

Die beschriebenen Mikro-ASHK entstehen beim Verbrennungsprozeß in Kohlekraftwerken. Der ca. 1 Gew%-tige Anteil an ASHK in der Flugasche wird abgetrennt und in separate Korngrößenbereiche (siehe oben) fraktioniert. Die Gasfüllung der Hohlkugeln ist die Folge des speziellen Verbrennungsprozesses. Die Mikro-ASHK sind im Handel erhältlich.

Bei den polymeren Bestandteilen des Compounds kann es sich um Thermoplaste, thermoplastische Elastomere oder einer Kombination von Thermoplasten und thermoplastischen Elastomeren handeln. Als Thermoplaste kommen insbesondere in Frage: ABS, ASA, Acrylate, PA, PC, PE, PET, PEC, PMMA, PP, PPE, PPO, PS, PVC, SAN, sowie entsprechende Co- und Blockpolymere und Abkömmlinge. Als thermoplastische Elastomere kommen in Betracht: TPE-O, TPE-S, TPE-E, TPE-A, TPE-U, TPE-V(TPV), z.B. PP/EPDM, SEPS, SEBS, SBS, SIS, S/B, NBR, EPM, EPDM.

Ein Polymer-Compound, was sich besonders bewährt hat, bestand aus 46 Gew% PP-Copolymer, 40 Gew% Mikro-ASHK, 10 Gew% Talkum, 2 Gew% Verarbeitungshilfen und 2 Gew% Haftvermittler.

Die Verwendung eines derartigen Materials ergab Formteile mit außerordentlich guter Formstabilität. Während bei einem entsprechenden Material, bei dem als Füllstoff nur Talkum verwendet wurde, diejenigen Bereiche des Formstückes, welche eine dickere Wandstärke aufwiesen, sichtbare Einfallungen enthielten, konnten derartige Einfallungen bei dem erfindungsgemäßen Compound nicht festgestellt werden.

Desweiteren haben sich bei den erfindungsgemäßen Materialien (Compounds) folgende Vorteile gegenüber vergleichbaren Materialien ohne Mikro-ASHK als Füllstoff gezeigt:
- Niedrige Wärmekapazität und damit verbunden eine Verkürzung der Zykluszeit zur Herstellung entsprechender Formteile.
- Gewichtsvorteile durch eine erhebliche Dichtereduzierung.
- Verbesserung des Längenausdehnungskoeffizienten.
- Bessere Oberflächen der Formteile gegenüber Formteilen, bei denen herkömmliche Füll- bzw. Verstärkungsstoffe, wie z.B. bei Glasfasern, verwendet werden.
- Günstigere Mengen-und Volumenäquivalenzen gegenüber mineralischen Füllstoffen bzw. Glasfasern oder Glaskugeln.
- Ausgeprägtes strukturelles Bruchverhalten bei schockartiger Stoßbelastung.
- Verbesserung der Dämmeigenschaften der verwendeten Basispolymere.
- Verbesserung des Brennverhaltens.
- Gute Fließfähigkeit auch bei höheren Füllgraden.
- Gute Umweltverträglichkeit und Recycelbarkeit.
- Ein gegenüber borsilicatischen Hohlkugeln deutlich verbessertes Preisleistungsverhältnis.

Weitere Einzelheiten und Vorteile der Erfindung ergeben sich aus den folgenden anhand einer Figur erläuterten Ausführungsbeispielen.

In der Fig. ist mit 1 ein Compound-Extruder mit einem Beschickungsaufsatz 2 bezeichnet. In den Beschickungsaufsatz 2, der als Mischer ausgebildet sein kann, werden sowohl eine vorgegebene Menge eines thermoplastisch verarbeitbaren Basispolymers 3 (z.B. PP), eine vorgegebene Menge eines Mikro-ASHK enthaltenden Füllstoffes 4 und weitere Zusatzstoffe 5 (Haftvermittler, Wärmestabilisator, Pigmente etc.) eingegeben. In dem Extruder 1 werden die Stoffe 3-5 gemischt, geknetet und erhitzt. Der am Ausgang 6 des Extruders austretende Strang wird dann einem Granulator 7 zugeführt, der beispielsweise zylindrisches oder elliptisches Granulat 8 erzeugt. Anschließend wird das Granulat 8 in einen Vorratsbehälter 9 geschüttet.

Nachfolgend sind drei Ausführungsbeispiele möglicher Zusammensetzungen des erfindungsgemäßen Compounds wiedergegeben:

### 1. Ausführungsbeispiel

| | |
|---|---|
| PP-Copolymer: | 60 Gew% |
| Füllstoff (Mikro-ASHK; Korngrößenverteilung: 5-500 µm) | 35 Gew% |

| Zusatzstoffe | |
|---|---|
| - Haftvermittler | 3 Gew% |
| - Wärmestabilisator etc. | 2 Gew% |

Bei diesem Ausführungsbeispiel erfolgte zunächst ein Vormischen des PP-Copolymers mit Verarbeitungsadditiven. Anschließend wurde die Vormischung in die Compoundieranlage eingebracht und aufgeschmolzen. Die Zugabe einer aus ASHK und Haftvermittler bestehenden Vormischung erfolgte über eine Seitenbeschickung in die Polymerschmelze. Dabei lag die Schmelztemperatur im oberen Schmelzbereich des Polymers. Nach einer Homogenisierung wurde die Schmelze ausgetragen. Anschließend erfolgte dann eine Granulierung des Compounds.

### 2. Ausführungsbeispiel

| | |
|---|---|
| PP-Copolymer: | 46 Gew% |
| 1.Füllstoff (Mikro-ASHK; Korngrößenverteilung: 5-500 µm) | 40 Gew% |
| 2.Füllstoff (Talkum) | 10 Gew% |

| Zusatzstoffe | |
|---|---|
| - Haftvermittler | 2 Gew% |
| - Wärmestabilisator etc. | 2 Gew% |

### 3. Ausführungsbeispiel

| | |
|---|---|
| PP-EPDM: | 60 Gew% |
| 1.Füllstoff (Mikro-ASHK; Korngrößenverteilung: 5-500 µm) | 27 Gew% |
| 2.Füllstoff (Talkum) | 8 Gew% |

| Zusatzstoffe | |
|---|---|
| - Haftvermittler | 3 Gew% |
| - Wärmestabilisator etc. | 2 Gew% |

Das in der vorstehenden Weise beschriebene Mikro-ASHK enthaltende Polymer-Compound kann nun in an sich bekannter Weise zur Herstellung eines Formteiles verarbeitet werden. In der Fig. ist dieses am Beispiel der Herstellung eines Formteiles mittels Spritzgießens dargestellt.

Wie der Fig. zu entnehmen ist, wird hierzu das Compoundgranulat 8 aus dem Vorratsbehälter 9 entnommen und über einen Beschickungsaufsatz 10 einer Spritzgießmaschine 11 zugeführt. Die am Ausgang 12 der Spritzgießmaschine 11 durch eine Düse 13 austretende Spritzgießmasse wird in ein entsprechendes Spritzgießwerkzeug 14 eingespritzt. Nach Abkühlung des Werkzeuges 14 wird dann das fertige Formstück 15 ausgestoßen.

Die Erfindung ist selbstverständlich nicht auf die vorstehend beschriebenen Ausführungsbeispiele beschränkt. So kann das die Mikro-ASHK enthaltende Compound beispielsweise auch mittels Extrusions-, Präge-, Press- und Thermoformen sowie Tauch-, Spritz-, Gieß- und Rotationsverfahren weiterverarbeitet werden.

Außerdem muß es sich bei den aus dem erfindungsgemäßen Compound hergestellten Formteilen nicht zwingend um Automobilteile handeln. Vielmehr können aus diesem Material auch Spritzguß- und Extrusionsteile für die Bau-, Möbel-, Elektroindustrie und den Anlagenbau gefertigt werden.

Schließlich braucht das entsprechende Formteil nicht ausschließlich aus dem Compound hergestellt werden, sondern kann auch einem oder mehreren mit dem Basispolymer des Compounds verträglichen Polymeren (als Batch) zugemischt werden.

### Bezugszeichenliste

- 1: Compound-Extruder
- 2: Beschickungsaufsatz
- 3: Basispolymer
- 4: Füllstoff, Mikro-ASHK
- 5: Zusatzstoffe
- 6: Ausgang
- 7: Granulator
- 8: Granulat, Polymer-Compound
- 9: Vorratsbehälter
- 10: Beschickungsaufsatz
- 11: Spritzgießmaschine
- 12: Ausgang
- 13: Düse
- 14: Spritzgießwerkzeug
- 15: Formteil

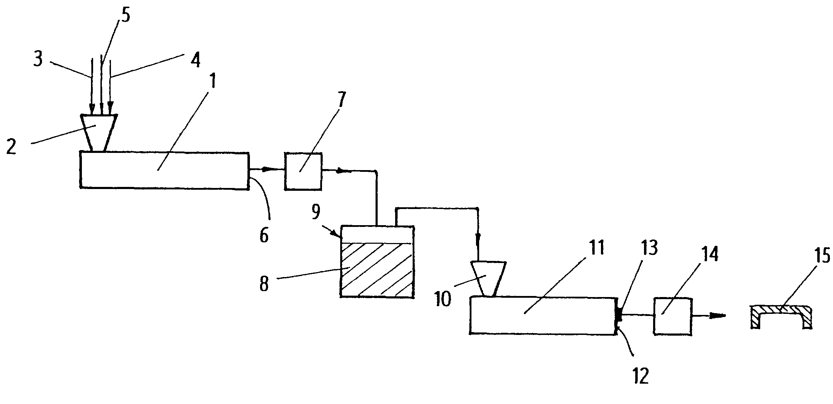

## Patentansprüche

1. Verfahren zur Herstellung eines Formteiles (15) aus einem thermoplastisch verarbeitbaren Kunststoffmaterial (8), **dadurch gekennzeichnet** daß in einem ersten Verfahrensabschnitt ein aus mindestens einem thermoplastisch verarbeitbaren Basispolymer (3) und einem Füllstoff (4) von 5-80 Gew% aluminiumsilicatischer Mikrohohlkugeln (Mikro-ASHK) bestehendes Polymer-Compound (8) hergestellt wird, und daß dann in einem zweiten Verfahrensabschnitt dieses Polymer-Compound (8) zur Herstellung des Formteiles (15) verwendet wird.

2. Verfahren nach Anspruch 1, **dadurch gekennzeichnet**, daß die Weiterverarbeitung des Polymer-Compounds (8) mittels Spritzgießens, Extrusion, Präge-, Press- und Thermoformen erfolgt.

3. Thermoplastisch verarbeitbares Polymer-Compound zur Herstellung von Formteilen (15), **dadurch gekennzeichnet**, daß das Polymer-Compound (8) einen Füllstoff (4) mit 5-80 Gew% aluminiumsilicatischen Mikrohohlkugeln (Mikro-ASHK) enthält, wobei der jeweilige Korndurchmesser der Mikrohohlkugeln ≤ 600 µm ist.

4. Thermoplastisch verarbeitbares Polymer-Compound nach Anspruch 3, **dadurch gekennzeichnet**, daß der Anteil des Füllstoffes zwischen 10 und 60 Gew% des Polymer-Compounds und ausschließlich aus Mikro-ASHK besteht.

5. Thermoplastisch verarbeitbares Polymer-Compound nach Anspruch 3, **dadurch gekennzeichnet**, daß der Füllstoff (4) aus Mikro-ASHK und einem anderen Füllstoff, wie Talkum, Kreide, Schwerspat, Glimmer, Kohlefasern, Glasfasern, Glaskugeln, organische oder mineralische Fasern, besteht, und daß der Füllstoffanteil des Mikro-ASHK mindestens 10 Gew% beträgt.

6. Thermoplastisch verarbeitbares Polymer-Compound nach einem der Ansprüche 3 bis 5, **dadurch gekennzeichnet**, daß die Korngrößenverteilung der Mikro-ASHK zwischen 5-500 µm liegt.

7. Thermoplastisch verarbeitbares Polymer-Compound nach einem der Ansprüche 3 bis 5, **dadurch gekennzeichnet**, daß die Korngrößenverteilung der Mikro-ASHK zwischen 5-300 µm liegt.

8. Thermoplastisch verarbeitbares Polymer-Compound nach einem der Ansprüche 3 bis 5, **dadurch gekennzeichnet**, daß die Korngrößenverteilung der Mikro-ASHK zwischen 5-85 µm liegt.

9. Thermoplastisch verarbeitbares Polymer-Compound nach einem der Ansprüche 3 bis 8, **dadurch gekennzeichnet**, daß die polymeren Bestandteile des Compounds aus einem Thermoplast, einem thermoplastischen Elastomer oder aus einer Kombination eines Thermoplastes und eines thermoplastischen Elastomers besteht.

10. Thermoplastisch verarbeitbares Polymer-Compound nach einem der Ansprüche 3 bis 9, **dadurch gekennzeichnet**, daß die einzelnen Mikro-ASHK eine Schale aus 27-33 Gew% Al₂O₃, 55-65 Gew% SiO₂ und maximal 4 Gew% Fe₂O₃ besitzen.

11. Thermoplastisch verarbeitbares Polymer-Compound nach Anspruch 10, **dadurch gekennzeichnet**, daß einzelne Mikro-ASHK eine Gasfüllung, bestehend aus Kohlendioxid und Stickstoff, aufweisen.

12. Thermoplastisch verarbeitbares Polymer-Compound nach einem der Ansprüche 3 bis 11, **dadurch gekennzeichnet**, daß das Polymer-Compound (8) aus 46 Gew% PP-Copolymer, 40 Gew% Mikro ASHK, 10 Gew% Talkum, 2 Gew% Verarbeitungshilfen und 2 Gew% Haftvermittler besteht.

13. Verfahren zur Herstellung eines Polymer-Compounds nach einem der Ansprüche 3 bis 12, **dadurch gekennzeichnet**, daß das Polymer-Compound aus mindestens einem Basispolymer (3), dem Mikro-ASHK enthaltenden Füllstoff (4) und eventuell erforderlichen Zusatzstoffen (5) kontinuierlich oder diskontinuierlich mittels Vormischer, Kneter, Extruder und nachfolgender Granulierung als zylindrisches oder elliptisches Granulat hergestellt wird.

14. Verfahren nach Anspruch 13, **dadurch gekennzeichnet**, daß die Mikro-ASHK vor dem Einbringen in den Vormischer, Kneter und Extruder mit einer Silanschlichte vorbeschichtet werden.

15. Verfahren nach Anspruch 13, **dadurch gekennzeichnet**, daß die Mikro-ASHK vor dem Einbringen in den Vormischer, Kneter und Extruder mit einem Haftvermittler (Compatibilizers), vorzugsweise einem maleinsäure- oder acrylsäuremodifizierten Polymer oder einem Ethylen-Vinylacetat Copolymers, beschichtet werden.

16. Verfahren nach einem der Ansprüche 13 bis 15, **dadurch gekennzeichnet**, daß es sich bei dem die Mikro-ASHK enthaltenden Füllstoff um ein freifließendes Pulver mit einer Dichte zwischen 0,4 und 1,0 g/cm³ handelt.
